# EUROPÄISCHE PATENTSCHRIFT

(11) **EP 2 598 364 B1**
(45) Veröffentlichungstag und Bekanntmachung des Hinweises auf die Patenterteilung: **25.06.2014**
(21) Anmeldenummer: 10739595.6
(22) Anmeldetag: 30.07.2010
(51) Int. Cl.: B60L 11/18

(54) **VERFAHREN ZUM ANMELDEN EINER ELEKTRISCHEN LADEEINRICHTUNG BEI EINEM ADMINISTRATIONSRECHNER**
METHOD FOR LOGGING AN ELECTRICAL CHARGING DEVICE ONTO AN ADMINISTRATION COMPUTER
PROCÉDÉ D'INSCRIPTION D'UN ÉQUIPEMENT DE CHARGE ÉLECTRIQUE AUPRÈS D'UN ORDINATEUR DE GESTION

(43) Veröffentlichungstag der Anmeldung: 05.06.2013
(73) Patentinhaber: Siemens Aktiengesellschaft, 80333 München (DE)
(72) Erfinder: NOLEWAIKA, Martin, 91056 Erlangen (DE); ZWIRLEIN, Andreas, 81379 München (DE)
(86) Internationale Anmeldenummer: PCT/EP2010/061080
(87) Internationale Veröffentlichungsnummer: WO 2012/013239

(56) Entgegenhaltungen:
- DE-A1-102008 048 657
- US-A1- 2002 158 749
- US-A1- 2009 259 603

## Beschreibung

Die Erfindung betrifft ein Verfahren zum Anmelden einer elektrischen Ladeeinrichtung für ein Elektrofahrzeug bei einem Administrationsrechner.

Die Anzahl an elektrisch betriebenen Fahrzeugen (Elektrofahrzeugen) im Straßenverkehr wird in naher Zukunft vermutlich stark ansteigen. Dann wird eine Vielzahl von Ladeeinrichtungen sowohl im öffentlichen Verkehrsraum als auch auf Privatgelände notwendig sein, um die Batterien dieser Elektrofahrzeuge bei Bedarf wieder aufzuladen.

Der Erfindung liegt die Aufgabe zugrunde, ein Verfahren, eine Ladeeinrichtung sowie einen Administrationsrechner anzugeben, mit denen ein sicherer und zuverlässiger Betrieb von Ladeeinrichtungen für Elektrofahrzeuge ermöglicht wird.

Diese Aufgabe wird erfindungsgemäß gelöst durch ein Verfahren, eine Ladeeinrichtung und einen Administrationsrechner nach den unabhängigen Patentansprüchen. Vorteilhafte Ausgestaltungen sind jeweils in den abhängigen Patentansprüchen angegeben.

Erfindungsgemäß angegeben wird ein Verfahren zum Anmelden einer elektrischen Ladeeinrichtung für ein Elektrofahrzeug bei einem Administrationsrechner. Bei diesem Verfahren werden bei der Ladeeinrichtung aus einem Speichermodul Anmeldedaten ausgelesen, die mindestens eine eindeutige Kennung der Ladeeinrichtung enthalten. Diese Anmeldedaten werden von der Ladeeinrichtung zu einem zentralen Administrationsrechner übertragen. Nach Erhalt der Anmeldedaten erzeugt der Administrationsrechner eine Anmeldebestätigungsnachricht und sendet diese an die Ladeeinrichtung ab. Daraufhin wird die Anmeldebestätigungsnachricht von der Ladeeinrichtung empfangen. Erst auf den Empfang der Anmeldebestätigungsnachricht hin wird von der Ladeeinrichtung ein Lade-Bereitschaftszustand eingenommen.

Bei diesem Verfahren ist insbesondere vorteilhaft, dass von der Ladeeinrichtung der Lade-Bereitschaftszustand erst dann eingenommen wird, wenn die Anmeldedaten von der Ladeeinrichtung zu dem Administrationsrechner übertragen worden sind und dies mittels der Anmeldebestätigungsnachricht der Ladeeinrichtung mitgeteilt worden ist. Damit wird - insbesondere bei der erstmaligen Installation/Aufbau der Ladeeinrichtung, beispielsweise am Straßenrand - sichergestellt, dass bei dem zentralen Administrationsrechner aufgrund der eindeutigen Kennung der Ladeeinrichtung bekannt ist, dass genau diese Ladeeinrichtung ab Empfang der Anmeldebestätigungsnachricht den Lade-Bereitschaftszustand einnimmt, d. h. ladebereit ist. Ab diesem Zeitpunkt können also Elektrofahrzeuge an der elektrischen Ladeeinrichtung aufgeladen werden.

Ein Laden von Elektrofahrzeugen vor Anmeldung der elektrischen Ladeeinrichtung bei dem Administrationsserver wird unterbunden, so dass bei dem Administrationsrechner stets Informationen über die potentiell zum Aufladen von Elektrofahrzeugen zur Verfügung stehenden Ladeeinrichtungen vorhanden sind.

Das Verfahren kann so ausgestaltet sein, dass die Anmeldedaten und/oder die Anmeldebestätigungsnachricht über das Internet oder über ein Mobilkommunikationsnetz übertragen werden. Damit lassen sich bei Verfügbarkeit eines Internetanschlusses die Anmeldedaten sehr einfach und kostengünstig zu dem Administrationsrechner übertragen. Insbesondere in abgelegenen Gegenden, in denen kein Internetanschluss verfügbar ist, lassen sich die Daten aber auch mittels des Mobilkommunikationsnetzes sicher und zuverlässig zu dem Administrationsrechner übertragen.

Das Verfahren kann auch so ausgestaltet sein, dass mit den Anmeldedaten zusätzlich Informationen über den (geografischen und/oder energieversorgungsnetzbezogenen) Standort der Ladeeinrichtung, über eine mögliche elektrische Ladeleistung der Ladeeinrichtung (insbesondere die maximale Ladeleistung), über eine mögliche Art der elektrischen Verbindung zwischen Ladeeinrichtung und Elektrofahrzeug, über einen Betreiber der Ladeeinrichtung und/oder über einen Hersteller der Ladeeinrichtung zu dem Administrationsrechner übertragen werden.

Dabei ist insbesondere vorteilhaft, dass als Anmeldedaten neben der eindeutigen Kennung der Ladeeinrichtung zusätzlich ladeeinrichtungsspezifische Informationen zu dem Administrationsrechner übertragen werden. Insbesondere können dies Informationen über den Standort der Ladeeinrichtung, über eine mögliche elektrische Ladeleistung der Ladeeinrichtung, über eine mögliche Art der elektrischen Verbindung zwischen der Ladeeinrichtung und einem Elektrofahrzeug, über einen Betreiber der Ladeeinrichtung und/oder über einen Hersteller der Ladeeinrichtung sein. Diese Informationen können ganz oder teilweise ebenfalls aus dem Speichermodul ausgelesen werden. Mittels dieser Information (oder eines Teils davon) kann der Administrationsrechner den Betrieb der einzelnen Ladeeinrichtungen noch sicherer und zuverlässiger gestalten, indem er beispielsweise überwacht, dass in einem die Ladeeinrichtungen versorgenden Energieversorgungsnetz stets ausreichende elektrische Leistungen zur Verfügung stehen und/oder dass nur Elektrofahrzeuge mit einer zur Ladeeinrichtung kompatiblen Art der elektrischen Verbindung zu dieser Ladeeinrichtung geleitet werden. Außerdem kann der Administrationsrechner im Fehlerfall beispielsweise den Betreiber der Ladeeinrichtung informieren.

Das Verfahren kann auch so ausgestaltet sein, dass
- die Anmeldedaten vollständig oder teilweise zu einem Zuordnungsrechner übertragen werden,
- von der Ladeeinrichtung daraufhin eine Adresse eines Administrationsrechners empfangen wird, die von dem Zuordnungsrechner zu den Anmeldedaten zugeordnet und zu der Ladeeinrichtung gesendet wurde, und
- daraufhin die Anmeldedaten von der Ladeeinrichtung zu dem Administrationsrechner, der diese Adresse aufweist, übertragen werden. Dabei können z.B. Informationen über den Standort der Ladeeinrichtung, Informationen über einen Hersteller der Ladeeinrichtung und/oder Informationen über einen Betreiber der Ladeeinrichtung zu dem Zuordnungsrechner übertragen werden.

Diese Ausgestaltung des erfindungsgemäßen Verfahrens ermöglicht es vorteilhafterweise beispielsweise, bei einer sehr großen Anzahl von Ladeeinrichtungen das Verfahren mit mehreren Administrationsrechnern durchzuführen, wenn ein einziger Administrationsrechner überlastet wäre. Dabei kann jeder der Administrationsrechner z.B. jeweils für einen bestimmten Standortbereich der Ladeeinrichtungen zuständig sein, beispielsweise für ein Land oder ein die Ladeeinrichtungen versorgendes Energieversorgungsnetz. Dabei wird mit Hilfe des Zuordnungsrechners ermittelt, welcher Administrationsrechner jeweils für einen bestimmten Standort einer jeweiligen Ladeeinrichtung zuständig ist und die Adresse dieses Administrationsrechners wird zu der jeweiligen Ladeeinrichtung übertragen. Ebenso kann jeder der Administrationsrechner jeweils für einen bestimmten Hersteller oder Betreiber der Ladeeinrichtungen zuständig sein.

Das Verfahren kann auch so ausgestaltet sein, dass die Informationen über den Standort der Ladeeinrichtung mittels einer am Ort der Ladevorrichtung angeordneten Ortsbestimmungseinrichtung, insbesondere mittels eines GPS-Moduls, ermittelt werden. In diesem Fall brauchen die Informationen über den Standort der Ladeeinrichtung nicht in dem Speichermodul abgespeichert zu sein. Daher braucht bei der Abspeicherung/Programmierung der Informationen auf dem Speichermodul noch nicht bekannt zu sein, an welchem Standort die Ladeeinrichtung installiert werden wird. Dadurch reduziert sich der Aufwand bei der ladeeinrichtungsspezifischen Programmierung des Speichermoduls. Vielmehr werden die Informationen über den Standort der Ladeeinrichtung während des Anmeldeverfahrens von der Ortsbestimmungseinrichtung ermittelt und bereitgestellt.

Das Verfahren kann auch so ausgestaltet sein, dass als Speichermodul ein Steckmodul verwendet wird, das insbesondere über eine Steck-Schnittstelle (z.B. Stecker-Buchse) mit der Ladeeinrichtung verbindbar ist. Dies ermöglicht es, das Speichermodul mit den die Ladeeinrichtung betreffenden Informationen unabhängig von der Ladeeinrichtung zu programmieren und erst bei Installation der Ladeeinrichtung (z. B. am Straßenrand) durch einfaches Stecken mit der Ladeeinrichtung elektrisch und mechanisch zu verbinden. Dabei ist insbesondere vorteilhaft, dass die in dem Speichermodul abgelegten Informationen durch ein einfaches elektrisches und mechanisches Verbinden (beispielsweise ein Einstecken des Speichermoduls in eine entsprechende Schnittstelle der Ladeeinrichtung) für die Ladeeinrichtung verfügbar gemacht werden. Insbesondere wird vermieden, das Servicepersonal (z. B. die die Ladeeinrichtung installierenden/aufbauenden Techniker) diese Informationen manuell an der Ladeeinrichtung über eine Tastatur oder ähnliches eingeben müssen, weil diese Art der Eingabe zeitaufwendig und damit teuer und außerdem fehleranfällig wäre.

Das Verfahren kann auch so ausgestaltet sein, dass
- nach einer Installation der Ladeeinrichtung an ihrem Standort von der Ladeeinrichtung mittels einer Ausgabeeinheit die Aufforderung ausgegeben wird, das (die Anmeldedaten enthaltende) Speichermodul mit einer Schnittstelle der Ladeeinrichtung zu verbinden, und
- nach Verbinden des Speichermoduls mit der Schnittstelle von der Ladeeinrichtung die Anmeldedaten aus dem Speichermodul ausgelesen werden.

Bei dieser Variante des erfindungsgemäßen Verfahrens werden die die Ladeeinrichtung installierenden Techniker oder anderes Servicepersonal mittels der an der Ausgabeeinheit ausgegebenen Aufforderung darauf hingewiesen, dass sie das zu der Ladeeinrichtung gehörende Speichermodul mit den ladeeinrichtungsspezifischen Anmeldedaten mit der Schnittstelle der Ladeeinrichtung zumindest elektrisch vorteilhafterweise aber auch mechanisch verbinden müssen. Nach dieser Verbindung des Speichermoduls mit der Schnittstelle können dann von der Ladeeinrichtung ohne weiteres Zutun der Techniker die Anmeldedaten aus dem Speichermodul ausgelesen werden.

Bezüglich des Anordnungsaspektes der oben genannten Aufgabe wird angegeben eine Ladeeinrichtung für ein Elektrofahrzeug mit
- einer elektrischen Schnittstelle für ein Speichermodul, insbesondere für ein steckbares Speichermodul (Steck-Speichermodul),
- einer Leseeinrichtung zum Auslesen von Anmeldedaten aus dem Speichermodul, wobei die Anmeldedaten mindestens eine eindeutige Kennung der Ladeeinrichtung enthalten,
- einer Sendeeinrichtung zum Übertragen der Anmeldedaten von der Ladeeinrichtung zu einem zentralen Administrationsrechner,
- einer Empfangseinrichtung zum Empfangen einer Anmeldebestätigungsnachricht, welche von dem Administrationsrechner nach Erhalt der Anmeldedaten erzeugt und zu der Ladeeinrichtung gesendet wurde, und
- einer Steuerungseinrichtung, welche erst auf den Empfang der Anmeldebestätigungsnachricht hin die Ladeeinrichtung in einen Lade-Bereitschaftszustand versetzt.

Diese Ladeeinrichtung weist eine elektrische Schnittstelle für ein Speichermodul auf, eine Leseeinrichtung zum Auslesen der Anmeldedaten und eine Sendeeinrichtung zum Übertragen der Anmeldedaten zu dem zentralen Administrationsrechner. Weiterhin weist diese Ladeeinrichtung eine Empfangseinrichtung zum Empfangen der Anmeldebestätigungsnachricht auf, sowie eine Steuerungseinrichtung, welche die Ladeeinrichtung in den Bereitschaftszustand versetzt, sobald die Anmeldebestätigungsnachricht bei der Ladeeinrichtung eingetroffen ist. Bei dieser Ladeeinrichtung ist sichergestellt, dass erst auf den Empfang der Anmeldungsbestätigungsnachricht hin die Ladeeinrichtung in den Bereitschaftszustand versetzt wird. Daher wird vorteilhafterweise vermieden, dass diese Ladeeinrichtung ohne Anmeldung bei dem Administrationsrechner ihren Betrieb aufnehmen kann.

Diese Ladeeinrichtung kann weiterhin ausgestattet sein mit einer Ortsbestimmungseinrichtung, insbesondere mit einem GPS-Modul (GPS = global positioning system), zum Ermitteln der Informationen über den Standort der Ladeeinrichtung.

Dies ermöglicht eine besonders bequeme Art der Ermittlung der Informationen über den geografischen Standort der Ladeeinrichtung.

Weiterhin kann die Ladeeinrichtung ausgestattet sein mit einer Ausgabeeinrichtung, mittels der die Aufforderung ausgebbar ist, das die Anmeldedaten enthaltende Speichermodul mit der Schnittstelle der Ladeeinrichtung zu verbinden.

Diese Ausgabeeinrichtung ermöglicht es, dass Servicepersonal bei der Installation der Ladeeinrichtung darauf hinzuweisen, das zugehörige Speichermodul mit der Schnittstelle der Ladeeinrichtung zu verbinden.

Bezüglich des Anordnungsaspektes der o. g. Aufgabe wird weiterhin angegeben: ein Administrationsrechner zum Administrieren einer elektrischen Ladeeinrichtung für ein Elektrofahrzeug, mit
- einer Empfangseinrichtung zum Empfangen von Anmeldedaten, die von der Ladeeinrichtung abgesendet wurden,
- einem Speicher zum Speichern der Anmeldedaten,
- einer Sendeeinrichtung zum Übertragen einer Anmeldebestätigungsnachricht zu der Ladeeinrichtung, und
- einer Datenverarbeitungseinrichtung zum Verarbeiten der Anmeldedaten.

Bei diesem Administrationsrechner werden vorteilhafterweise die Anmeldedaten der elektrischen Ladeeinrichtung empfangen und abgespeichert, so dass bei dem Administrationsrechner stets die Informationen zur Verfügung stehen, welche Ladeeinrichtungen zum Aufladen von Batterien der Elektrofahrzeuge vorhanden sind.

Im Folgenden wird die Erfindung anhand von Ausführungsbeispielen näher erläutert. Dazu ist in
- Figur 1: ein Ausführungsbeispiel des erfindungsgemäßen Verfahrens, einer erfindungsgemäßen Ladeeinrichtung und eines erfindungsgemäßen Administrationsrechners und in
- Figur 2: ein weiteres Ausführungsbeispiel des Verfahrens, der Ladeeinrichtung sowie des Administrationsrechners dargestellt.

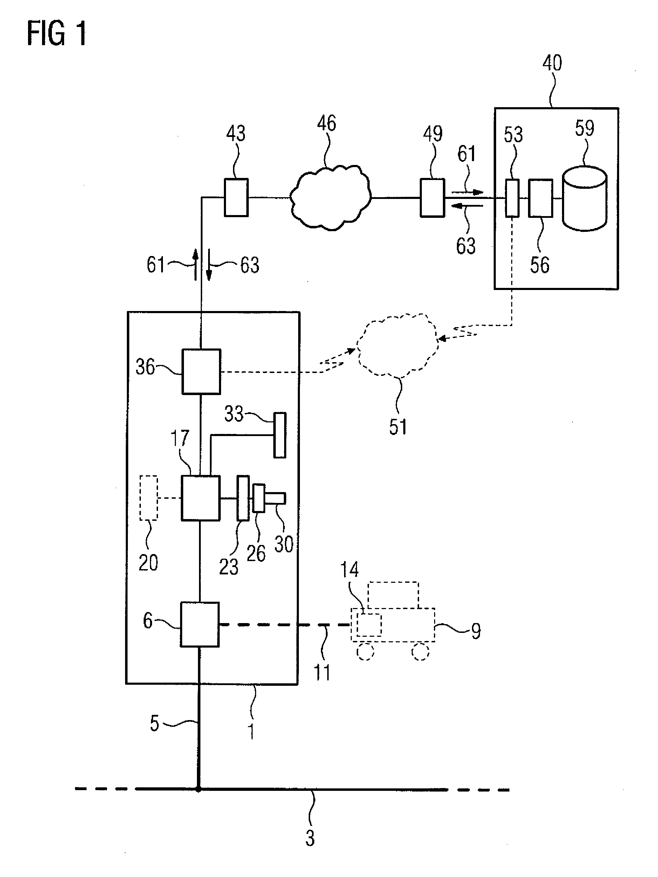

In Figur 1 ist eine Ladeeinrichtung 1 dargestellt, welche mit einem Energieversorgungsnetz 3 elektrisch verbunden ist. Im Ausführungsbeispiel handelt es sich bei dem Energieversorgungsnetz 3 um ein Niederspannungsenergieversorgungsnetz, welches dreiphasigen Wechselstrom mit einer Spannung von 400 V liefert. Ein Abzweig 5 des Energieversorgungsnetzes 3 überträgt die von dem Energieversorgungsnetz 3 bereitgestellte elektrische Energie zu einem Ladestrommodul 6 der Ladeeinrichtung 1. Von dem Ladestrommodul 6 aus kann ein Elektrofahrzeug 9 über ein Ladekabel 11 mit elektrischer Energie versorgt werden, um eine Batterie 14 des Elektrofahrzeugs 9 aufzuladen. Zunächst ist jedoch an der Ladeeinrichtung 1 weder ein Ladekabel noch ein Elektrofahrzeug angeschlossen, daher sind Ladekabel und Elektrofahrzeug mit gestrichelten Linien dargestellt.

Das Ladestrommodul 6 wird von einer Steuerungseinrichtung 17 gesteuert, welche im Ausführungsbeispiel als eine speicherprogrammierbare Steuerung (SPS) ausgestaltet ist. Die Steuerungseinrichtung 17 ist weiterhin optional mit einer Ortsbestimmungseinrichtung 20 verbunden, welche den geografischen Ort/Standort der Ladeeinrichtung 1 ermittelt und entsprechende geografische Koordinaten ausgibt. Bei dieser Ortsbestimmungseinrichtung 20 kann es sich beispielsweise um ein GPS-Modul handeln. Weiterhin ist die Steuerungseinrichtung 17 mit einer Leseeinrichtung 23 verbunden, welche ihrerseits mit einer Schnittstelle 26 verbunden ist. Die Schnittstelle 26 ist im Ausführungsbeispiel als eine Steckbuchse ausgestaltet, in die ein Speichermodul 30 einsteckbar ist. Das Speichermodul 30 ist zunächst nicht mit der Ladeeinrichtung verbunden, es wird unabhängig von der Ladeeinrichtung 1 hergestellt und mit Daten versehen/programmiert. Bei dem Speichermodul 30 kann es sich beispielsweise um ein Speichermodul in Art eines steckbaren Speichermoduls/Steckmoduls handeln, z. B. um einen sogenannten USB-Stick. Das Speichermodul 30 weist seinerseits eine nicht explizit dargestellte Schnittstelle in Form eines Steckers (hier eines USB-Steckers) auf, welche sowohl elektrisch als auch mechanisch mit der Schnittstelle 26 korrespondiert und eine elektrische und mechanische Verbindung des Speichermoduls mit der Ladeeinrichtung 1 ermöglicht.

Weiterhin weist die Ladeeinrichtung 1 eine mit der Steuerungseinrichtung 17 verbundene Ausgabeeinrichtung 33 auf, mit welcher unter anderem Informationen für die Ladeeinrichtung installierendes Servicepersonal ausgegeben werden können. Weiterhin weist die Ladeeinrichtung eine Sende- und Empfangseinrichtung 36 auf, mittels der Informationen/Daten von der Ladeeinrichtung 1 an einen Administrationsrechner 40 gesendet werden bzw. von diesem Administrationsrechner 40 gesendete Daten/Informationen empfangen werden können. Der Administrationsrechner kann z.B. in einem sogenannten "operation center" integriert sein, welches den Betrieb der Ladeeinrichtung während des Ladevorgangs koordiniert.

Im Ausführungsbeispiel ist die Sende- und Empfangseinrichtung 36 über ein erstes DSL-Modem 43, das Internet 46 und ein zweites DSL-Modem 49 mit dem Administrationsrechner 40 verbunden. Alternativ kann die Verbindung zwischen Ladeeinrichtung 1 und Administrationsrechner 40 aber auch kabellos erfolgen, beispielsweise über eine mobile Kommunikationsverbindung mittels eines in gestrichelten Linien dargestellten Mobilkommunikationsnetzes 51 (beispielsweise über ein GSM-Mobilfunknetz oder ein UMTS-Mobilfunknetz).

Der Administrationsrechner 40 weist im Ausführungsbeispiel eine Sende- und Empfangseinheit 53, eine Datenverarbeitungseinheit 56 sowie einen Speicher 59 (beispielsweise ausgestaltet in Form einer Datenbank) auf.

Das Verfahren zum Anmelden der elektrischen Ladeeinrichtung 1 bei dem Administrationsrechner 40 läuft folgendermaßen ab. Die Ladeeinrichtung 1 wird zunächst ohne Speichermodul 30 an ihrem Standort installiert, d. h. die Schnittstelle 26 ist unbelegt. Nachdem die Ladeeinrichtung 1 (z. B. am Straßenrand oder auf einem Parkplatz) aufgestellt und das Ladestrommodul 6 mit dem Abzweig 5 des Energieversorgungsnetzes 3 elektrisch verbunden wurde, beginnt/startet selbsttätig das Verfahren zum Anmelden der Ladeeinrichtung bei dem Administrationsrechner. Dazu wird an der Ausgabeeinrichtung 33 (bei der es sich beispielsweise um einen Lautsprecher, ein Display oder um eine Leuchtdiodenanzeige handeln kann) eine Aufforderung an das die Ladesäule aufstellende Servicepersonal ausgegeben, das Speichermodul 30 mit der Schnittstelle 26 der Ladeeinrichtung 1 zu verbinden.

Zu der Ladeeinrichtung 1 wurde schon vor deren Installation/Aufbau das zugehörige Speichermodul 30 programmiert: es wurden der Ladeeinrichtung 1 zugehörige Anmeldedaten in dem Speichermodul abgespeichert. Im Ausführungsbeispiel handelt es sich bei dem Speichermodul 30 um einen USB-Stick, in dem folgende Anmeldedaten abgespeichert sind:
1. Eine eindeutige Kennung der Ladeeinrichtung: Im Ausführungsbeispiel wird als eindeutige Kennung der Ladeeinrichtung 1 ein weltweit eindeutiger Identifizierungscode verwendet, der sich z.B. aus einer Hersteller-Kennung und einer einmalig vergebenen Zeichenkette zusammensetzt.
2. Informationen über den Standort der Ladeeinrichtung: Z.B. den geografischen Standort der Ladeeinrichtung beschreibende Daten (beispielsweise GPS-Daten oder Ortsdaten in Form von Längen- und Breitengraden) und/oder energieversorgungsnetzbezogene Daten über den Standort der Ladeeinrichtung (z. B. Ladeeinrichtung ist an Abzweig Nr. 127 des Energieversorgungsnetzes Nr. 68 angeschlossen).
3. Informationen über mögliche elektrische Ladeleistungen der Ladeeinrichtung, insbesondere die maximal mögliche Ladeleistung (z. B. mögliche elektrische Ladeleistungen: 9 kW, 14 kW, 22 kW, 44 kW).
4. Informationen über eine mögliche Art der elektrischen Verbindung zwischen Ladeeinrichtung und Elektrofahrzeug (z. B. Verbindung erfolgt über handelsüblichen Netzspannungsstecker (z.B. in Deutschland: Schutzkontaktstecker/Schukostecker) oder Verbindung erfolgt über Stecker nach Norm IEC 62196.
5. Der Betreiber der Ladeeinrichtung und/oder der Hersteller der Ladeeinrichtung(z. B. Betreiber ist Firma XY, Hersteller ist Firma YZ).
6. Adresse (z.B. IP-Adresse) des Administrationsrechners und/oder Adresse (z.B. IP-Adresse) eines Zuordnungsrechners

Die Anmeldedaten enthalten stets die eindeutige Kennung der Ladeeinrichtung, d.h. die Informationen zu 1. Die anderen Informationen (2. bis 6.) können optional vollständig oder teilweise in den Anmeldedaten enthalten sein und mit diesen zu dem Administrationsrechner übertragen werden. Desweiteren können in dem Speichermodul Parameterdaten/Konfigurationsdaten für die Steuereinrichtung 17 gespeichert sein.

Das Speichermodul 30 kann im Ausführungsbeispiel nach der Installation der Ladeeinrichtung auf einfache Art und Weise elektrisch und mechanisch mit der Schnittstelle 26 der Ladeeinrichtung 1 verbunden werden, es handelt sich um ein nach Art eines Steckmoduls (hier eines USB-Sticks) ausgestaltetes Speichermodul. Dieses Speichermodul kann auf einfache Art und Weise in die als Buchse (hier: USB-Buchse) ausgestaltete Schnittstelle 26 eingesteckt bzw. aus dieser wieder herausgezogen werden.

Nach elektrischem Verbinden des Speichermoduls 30 mit der Schnittstelle 26 werden die in dem Speichermodul 30 gespeicherten Anmeldedaten von der Leseeinrichtung 23 aus dem Speichermodul 30 ausgelesen und über die Steuerungseinrichtung 17 zu der Sende- und Empfangseinrichtung 36 übertragen. Daraufhin werden diese Anmeldedaten von der Sende- und Empfangseinrichtung 36 über das erste DSL-Modem 43, das Internet 46 und das zweite DSL-Modem 49 zu der Sende- und Empfangseinrichtung 53 des Administrationsrechners 40 übertragen (Pfeil 61). Nach Eintreffen der Anmeldedaten bei dem Administrationsrechner 40 prüft die Datenverarbeitungseinheit 56 optional die Anmeldedaten beispielsweise daraufhin, ob die Anmeldedaten gültig sind (z.B. ob die Anmeldedaten ein gültiges Datenformat aufweisen, ob die Werte der Anmeldedaten innerhalb vorgegebener Grenzen liegen etc.). Im Falle der Ungültigkeit wird das Anmeldeverfahren mit einer Fehlermeldung abgebrochen. Bei dem Administrationsrechner 40 werden dann die Anmeldedaten von der Datenverarbeitungseinheit 56 in dem Speicher 59 abgespeichert, beispielsweise in einer mittels dieses Speichers 59 realisierten Datenbank. Daraufhin erzeugt die Datenverarbeitungseinheit 56 eine Anmeldebestätigungsnachricht (z.B. eine OK-Nachricht) und sendet diese Anmeldebestätigungsnachricht über die Sende- und Empfangseinrichtung 53, das zweite DSL-Modem 49, das Internet 46 und das erste DSL-Modem 43 zu der Sende- und Empfangseinrichtung 36 der Ladeeinrichtung 1 zurück (Pfeil 63). Daraufhin wird die Anmeldebestätigungsnachricht zu der Steuerungseinrichtung 17 weitergeleitet und die Steuerungseinrichtung 17 schaltet einen Lade-Bereitschaftszustand der Ladeeinrichtung 1 ein. In diesem Lade-Bereitschaftszustand ist die Ladeeinrichtung bereit, ein an dem Ladestrommodul 6 anzuschließendes Elektroauto 9 mit elektrischer Energie zu versorgen. Sobald ein solches Elektrofahrzeug über ein Ladekabel elektrisch mit der Ladeeinrichtung verbunden ist (wie beispielsweise das mit gestrichelten Linien dargestellte Elektrofahrzeug 9), kann der Ladevorgang der Batterie 14 des Elektrofahrzeugs gestartet werden.

Bei einem alternativen Ausführungsbeispiel können die Informationen über den Standort der Ladeeinrichtung auch mittels der Ortsbestimmungseinrichtung 20 (GPS-Modul) selbsttätig ermittelt und von der Ortsbestimmungseinrichtung 20 zu der Steuerungseinrichtung 17 übertragen werden. In diesem Falle brauchen die Informationen über den Standort der Ladeeinrichtung nicht in dem Speichermodul 30 abgespeichert zu sein.

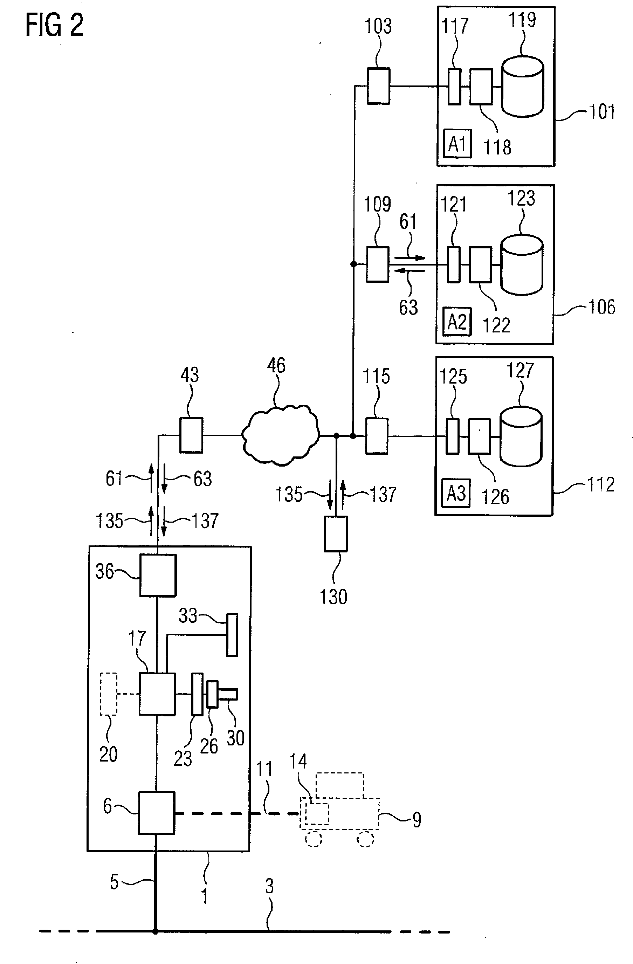

In Figur 2 ist ein weiteres Ausführungsbeispiel dargestellt, welches sich von dem Ausführungsbeispiel der Figur 1 im Wesentlichen dadurch unterscheidet, dass statt nur eines Administrationsrechners 40 ein erster Administrationsrechner 101 über ein zugehöriges DSL-Modem 103, ein zweiter Administrationsrechner 106 über ein zweites DSL-Modem 109 und ein dritter Administrationsrechner 112 über ein drittes DSL-Modem 115 mit dem Internet 46 verbunden ist. In diesem Ausführungsbeispiel sind nämlich bereits sehr viele Ladeeinrichtungen in verschiedensten geografischen Gegenden bzw. Ländern installiert. Den einzelnen geografischen Gegenden/Länder ist jeweils einer der Administrationsrechner 101, 106 oder 112 zugeordnet. So ist beispielsweise den Ladeeinrichtungen eines ersten Landes der erste Administrationsrechner 101, den Ladeeinrichtungen eines zweiten Landes der zweite Administrationsrechner 106 und den Ladeeinrichtungen eines dritten Landes der dritte Administrationsrechner 112 zugeordnet. Alternativ können die einzelnen Administrationsrechner auch verschiedenen Betreibern der Ladeeinrichtungen oder verschiedenen Herstellern der Ladeeinrichtungen zugeordnet sein.

Der erste Administrationsrechner 101 weist eine Sende- und Empfangseinrichtung 117, eine Datenverarbeitungseinheit 118 und einen Speicher 119 auf. Der zweite Administrationsrechner 106 weist eine Sende- und Empfangseinrichtung 121, eine Datenverarbeitungseinheit 122 und einen Speicher 123 auf. Der dritte Administrationsrechner 112 weist eine Sende- und Empfangseinrichtung 125, eine Datenverarbeitungseinheit 126 und einen Speicher 127 auf.

Der erste Administrationsrechner 101 weist eine erste Adresse A1 auf, der zweite Administrationsrechner 106 weist eine zweite Adresse A2 auf und der dritte Administrationsrechner 112 weist eine dritte Adresse A3 auf. Bei den Adressen kann es sich beispielsweise jeweils um IP-Adressen handeln.

Wenn die Ladeeinrichtung 1 nach ihrer Installation die Anmeldedaten zu dem für sie zuständigen/zu dem ihr zugeordneten Administrationsrechner senden muss, so ist zunächst auf Seiten der Ladeeinrichtung 1 nicht klar, welcher der Administrationsrechner 101, 106 und 112 der zuständige Administrationsrechner ist. Aus diesem Grund sendet die Ladeeinrichtung 1 zunächst die Informationen über den Standort der Ladeeinrichtung 1 über das erste DSL-Modem 43 und das Internet 46 zu einem Zuordnungsrechner 130, vgl. Pfeil 135. Bei diesem Zuordnungsrechner 130 sind (beispielsweise in Form einer Tabelle) Zuordnungen abgespeichert zwischen allen möglichen Standorten von Ladeeinrichtungen und den Adressen A1, A2 bzw. A3. Im Ausführungsbeispiel ermittelt der Zuordnungsrechner 130, dass dem Standort der Ladeeinrichtung 1 die zweite Adresse A2 des zweiten Administrationsrechners 106 zugeordnet ist. Daraufhin sendet der Zuordnungsrechner 130 diese Adresse A2 über das Internet 46 und das erste DSL-Modem 43 an die Ladeeinrichtung 1 zurück (Pfeil 137). Diese Adresse A2 stellt für die Ladeeinrichtung die Adresse des Administrationsrechners dar, bei dem sich die Ladeeinrichtung anmelden muss. Daraufhin sendet die Ladeeinrichtung 1 die Anmeldedaten an den Administrationsrechner mit der Adresse A2, also an den zweiten Administrationsrechner 106 (Pfeil 61). Der weitere Ablauf entspricht dem in Zusammenhang mit der Figur 1 beschriebenen Ablauf.

Alternativ können bei dem Zuordnungsrechner 130 auch Zuordnungen zwischen verschiedenen Betreibern der Ladeeinrichtungen und den Adressen A1, A2 oder A3 abgelegt sein. In einer weiteren alternativen Ausführungsform können im Zuordnungsrechner 130 auch Zuordnungen zwischen verschiedenen Herstellern der Ladeeinrichtungen und den Adressen A1, A2 oder A3 abgelegt sein.
In diesen Fällen sendet die Ladeeinrichtung 1 die Informationen über den Betreiber oder die Informationen über den Hersteller zu dem Zuordnungsrechner 130. Der Zuordnungsrechner sendet daraufhin die entsprechende zugeordnete Adresse an die Ladeeinrichtung 1 zurück. Im Allgemeinen sendet die Ladeeinrichtung also die Anmeldedaten vollständig oder teilweise zu dem Zuordnungsrechner und der Zuordnungsrechner ordnet den Anmeldedaten eine Adresse eines Administrationsrechners zu. Diese Adresse wird daraufhin zur Ladeeinrichtung gesendet und von dieser empfangen. Daraufhin werden die Anmeldedaten von der Ladeeinrichtung 1 zu dem Administrationsrechner, der diese Adresse aufweist, übertragen.

Es wurde ein Verfahren, eine Ladeeinrichtung sowie ein Administrationsrechner beschrieben, welche ein automatisches Anmelden der elektrischen Ladeeinrichtung bei dem Administrationsrechner ermöglichen. Dabei sind die Anmeldedaten auf einem transportablen Speichermodul gespeichert; dieses Speichermodul kann nach Installation der Ladeeinrichtung elektrisch mit der Ladeeinrichtung verbunden werden. Beim darauffolgenden automatischen Anmelden werden diese Anmeldedaten zu dem Administrationsrechner übermittelt, der daraufhin eine Anmeldebestätigungsnachricht an die Ladeeinrichtung zurücksendet. Erst auf den Empfang dieser Anmeldebestätigungsnachricht hin geht die Ladeeinrichtung in ihren Bereitschaftszustand über. Dabei sind vorteilhafterweise keine manuellen Dateneingaben der die Ladeeinrichtung installierenden/aufbauenden Techniker vor Ort (keine sogenannte manuelle Vorortparametrierung) notwendig; vielmehr sind die Anmeldedaten bereits in dem Speichermodul abgespeichert. Dadurch braucht das Speichermodul lediglich mit der Schnittstelle der Ladeeinrichtung verbunden zu werden. Alle weiteren Schritte des Anmeldeverfahrens laufen automatisch ab. Dadurch kann die Ladeeinrichtung kurzfristig nach dem Stromanschluss, d. h. nach der elektrischen Verbindung mit dem Energieversorgungsnetz, in Betrieb genommen werden. Die Installation der Ladeeinrichtung kann also in sehr kurzer Zeit vollzogen werden, was erhebliche Kostenvorteile bringt. Außerdem braucht das die Installation durchführende Servicepersonal nicht für die Anmeldung bzw. Parametrierung der Ladeeinrichtung ausgebildet zu sein. Weiterhin entfällt die Gefahr einer fehlerhaften manuellen Eingabe von Daten durch das Servicepersonal. Zusätzlich ist vorteilhaft, dass bei einem Defekt der Ladeeinrichtung und einem damit verbundenen Austausch von Hardwarekomponenten keine erneute Parametrierung durchgeführt zu werden braucht, sondern lediglich das Speichermodul mit der reparierten Ladeeinrichtung verbunden wird.

## Patentansprüche

1. Verfahren zum Anmelden einer elektrischen Ladeeinrichtung (1) für ein Elektrofahrzeug (9) bei einem Administrationsrechner (40), wobei bei dem Verfahren
- bei der Ladeeinrichtung (1) aus einem Speichermodul (30) Anmeldedaten ausgelesen werden, die mindestens eine eindeutige Kennung der Ladeeinrichtung enthalten,
- diese Anmeldedaten von der Ladeeinrichtung (1) zu einem zentralen Administrationsrechner (40) übertragen werden (61),
- von der Ladeeinrichtung (1) eine Anmeldebestätigungsnachricht empfangen wird (63), welche von dem Administrationsrechner (40) nach Erhalt der Anmeldedaten zu der Ladeeinrichtung gesendet wurde, und
- auf den Empfang der Anmeldebestätigungsnachricht hin von der Ladeeinrichtung (1) ein Lade-Bereitschaftszustand eingenommen wird,
**dadurch gekennzeichnet, dass**
- das Speichermodul ein transportables Speichermodul ist,
- nach einer Installation der Ladeeinrichtung (1) an ihrem Standort von der Ladeeinrichtung (1) mittels einer Ausgabeeinheit (33) die Aufforderung ausgegeben wird, das Speichermodul (30) mit einer Schnittstelle (26) der Ladeeinrichtung zu verbinden, und
- nach Verbinden des Speichermoduls (30) mit der Schnittstelle (26) von der Ladeeinrichtung (1) die Anmeldedaten aus dem Speichermodul (30) ausgelesen werden.

2. Verfahren nach Anspruch 1,
**dadurch gekennzeichnet, dass**
- die Anmeldedaten und/oder die Anmeldebestätigungsnachricht über das Internet (46) oder über ein Mobilkommunikationsnetz (51) übertragen werden.

3. Verfahren nach Anspruch 1 oder 2,
**dadurch gekennzeichnet, dass**
- als Anmeldedaten zusätzlich Informationen über den Standort der Ladeeinrichtung (1), über eine mögliche elektrische Ladeleistung der Ladeeinrichtung (1), über eine mögliche Art der elektrischen Verbindung zwischen der Ladeeinrichtung (1) und einem Elektrofahrzeug (9), über einen Betreiber der Ladeeinrichtung (1) und/oder über einen Hersteller der Ladeeinrichtung (1) zu dem Administrationsrechner (40) übertragen werden.

4. Verfahren nach einem der vorhergehenden Ansprüche, **dadurch gekennzeichnet, dass**
- die Anmeldedaten vollständig oder teilweise zu einem Zuordnungsrechner (130) übertragen werden (135),
- von der Ladeeinrichtung (1) daraufhin eine Adresse eines Administrationsrechners empfangen wird (137), die von dem Zuordnungsrechner (130) zu den Anmeldedaten zugeordnet und zu der Ladeeinrichtung (1) gesendet wurde, und
- daraufhin die Anmeldedaten von der Ladeeinrichtung (1) zu dem Administrationsrechner (106), der diese Adresse aufweist, übertragen werden (61).

5. Verfahren nach einem der vorhergehenden Ansprüche, **dadurch gekennzeichnet, dass**
- die Informationen über den Standort der Ladeeinrichtung (1) mittels einer am Ort der Ladevorrichtung (1) angeordneten Ortsbestimmungseinrichtung (20), insbesondere mittels eines GPS-Moduls (20), ermittelt werden.

6. Verfahren nach einem der vorhergehenden Ansprüche, **dadurch gekennzeichnet, dass**
- als Speichermodul ein Steckmodul (30) verwendet wird.

7. Ladeeinrichtung (1) für ein Elektrofahrzeug (9) mit
- einer elektrischen Schnittstelle (26) für ein Speichermodul (30), insbesondere für ein steckbares Speichermodul (30),
- einer Leseeinrichtung (23) zum Auslesen von Anmeldedaten aus dem Speichermodul (30), wobei die Anmeldedaten mindestens eine eindeutige Kennung der Ladeeinrichtung (1) enthalten,
- einer Sendeeinrichtung (36) zum Übertragen der Anmeldedaten zu einem zentralen Administrationsrechner (40),
- einer Empfangseinrichtung (36) zum Empfangen einer Anmeldebestätigungsnachricht, welche von dem Administrationsrechner (40) nach Erhalt der Anmeldedaten zu der Ladeeinrichtung (1) gesendet wurde, und
- einer Steuerungseinrichtung (17), welche erst auf den Empfang der Anmeldebestätigungsnachricht hin die Ladeeinrichtung (1) in einen Lade-Bereitschaftszustand versetzt **gekennzeichnet durch**
- eine Ausgabeeinrichtung (33), welche die Aufforderung ausgibt, das die Anmeldedaten enthaltende Speichermodul (30) mit der Schnittstelle (26) der Ladeeinrichtung (1) zu verbinden.

8. Ladeeinrichtung nach Anspruch 7,
**gekennzeichnet durch**
- eine Ortsbestimmungseinrichtung (20), insbesondere ein GPS-Modul (20), zum Ermitteln von Informationen über den Standort der Ladeeinrichtung (1).

## Claims

1. Method for logging an electrical charging device (1) for an electric vehicle (9) onto an administration computer (40), by which method
- log-on data, which contains at least one unique identifier for the charging device, is read out from a memory module (30) at the charging device (1),
- said log-on data is transmitted (61) from the charging device (1) to a central administration computer (40),
- the charging device (1) receives (63) a log-on confirmation message, which is sent out to the charging device by the administration computer (40) after it has received the log-on data, and
- upon receipt of the log-on confirmation message, the charging device (1) assumes a ready-for-charging state,
**characterised in that**
- the memory module is a transportable memory module,
- after installation of the charging device (1) at its location, the charging device (1) outputs, by means of an output unit (33), a request for the memory module (30) to be connected to an interface (26) on the charging unit, and
- after connection of the memory module (30) to the interface (26), the log-on data is read out from the memory module (30) by the charging unit (1).

2. Method according to claim 1,
**characterised in that**
- the log-on data and/or the log-on confirmation message are/is transmitted via the Internet (46) or via a mobile communication network (51).

3. Method according to claim 1 or 2,
**characterised in that**
- as log-on data, additional items of information are transmitted to the administration computer (40) about the location of the charging device (1), about the possible electrical charging capacity of the charging device (1), about the possible nature of the electrical connection between the charging device (1) and an electric vehicle (9), about an operator of the charging device (1) and/or about the manufacturer of the charging device (1).

4. Method according to one of the preceding claims,
**characterised in that**
- the log-on data is transmitted (135), either in full or in part, to an assignment computer (130),
- the charging device (1) thereupon receives (137) from the assignment computer (130) an address of an administration computer which the assignment computer (130) has assigned to the log-on data and has sent to the charging device (1), and
- the charging device (1) thereupon transmits (61) the log-on data to the administration computer (106) which has this address.

5. Method according to one of the preceding claims,
**characterised in that**
- the items of information about the location of the charging device (1) are determined by means of a location determination device (20), in particular by means of a GPS module (20), arranged at the location of the charging device (1).

6. Method according to one of the preceding claims,
**characterised in that**
- a plug-in module (30) is used as the memory module.

7. Charging device (1) for an electric vehicle (9) with
- an electrical interface (26) for a memory module (30), in particular for a plug-in memory module (30),
- a reader unit (23) for reading out log-on data from the memory module (30), wherein the log-on data includes at least one unique identifier for the charging device (1),
- a transmission device (36) for transmitting the log-on data to a central administration computer (40),
- a receiving device (36) for receiving a log-on confirmation message, which is sent to the charging unit (1) by the administration computer (40) after it receives the log-on data,
- a control device (17) which puts the charging device (1) into a ready-for-charging state, but only after receipt of the log-on confirmation message
**characterised by**
- an output device (33), which outputs the request for the memory module (30) which contains the log-on data to be connected to the interface (26) on the charging device (1).

8. Charging device according to claim 7,
**characterised by**
- a location determination device (20), in particular a GPS module (20), for determining items of information about the location of the charging device (1).

## Revendications

1. Procédé d'inscription d'un dispositif (1) de charge électrique d'un véhicule (9) électrique auprès d'un ordinateur (40) de gestion, procédé dans lequel
- on lit auprès du dispositif (1) de charge dans un module (30) de mémoire des données d'inscription, qui contiennent au moins une caractérisation univoque du dispositif de charge,
- on transmet (61) ces données d'inscription du dispositif (1) de charge à un ordinateur (40) central de gestion,
- on reçoit (63) par le dispositif (1) de charge un message de confirmation d'inscription, qui est envoyé par l'ordinateur (40) de gestion après réception des données d'inscription du dispositif de charge et
- à la réception du message de confirmation d'inscription, il est pris par le dispositif (1) de charge un état prêt à la charge,
**caractérisé en ce que**
- le module de mémoire est un module de mémoire transportable,
- après une installation du dispositif (1) de charge sur son emplacement, il est émis par le dispositif (1) de charge au moyen d'une unité (33) d'émission la demande que le module (30) de mémoire soit relié à une interface (26) du dispositif de charge et
- après la liaison du module (30) de mémoire avec l'interface (26) par le dispositif (1) de charge, les données d'inscription sont lues dans le module (30) de mémoire.

2. Procédé suivant la revendication 1,
**caractérisé en ce que**
- on transmet les données d'inscription et/ou le message de confirmation d'inscription par l'internet (46) ou par un réseau (51) de communication mobile.

3. Procédé suivant la revendication 1 ou 2,
**caractérisé en ce que**
- on transmet à l'ordinateur (40) de gestion, comme données d'inscription, en plus des informations sur l'emplacement du dispositif (1) de charge, sur une puissance de charge électrique possible du dispositif (1) de charge, sur un type possible de la liaison électrique entre le dispositif (1) de charge et un véhicule (9) électrique, sur un exploitant du dispositif (1) de charge et/ou sur un fabricant du dispositif (1) de charge.

4. Procédé suivant l'une des revendications précédentes,
**caractérisé en ce que**
- on transmet (135) les données d'inscription en tout ou partie à un ordinateur (130) associé,
- il est reçu (137) par le dispositif (1) de charge ensuite une adresse d'un ordinateur de gestion, qui a été associée par l'ordinateur (130) d'association aux données d'inscription et qui a été envoyée au dispositif (1) de charge et
- ensuite, on transmet (61) des données d'inscription du dispositif (1) de charge à l'ordinateur (106) de gestion, qui a cette adresse.

5. Procédé suivant l'une des revendications précédentes,
**caractérisé en ce que**
- on détermine les informations sur l'emplacement du dispositif (1) de charge au moyen d'un dispositif (20) de localisation associé à l'emplacement du dispositif (1) de charge, notamment au moyen d'un module (20) GPS.

6. Procédé suivant l'une des revendications précédentes,
**caractérisé en ce que**
- on utilise, comme module de mémoire, un module (30) enfichable.

7. Dispositif (1) de charge d'un véhicule (9) électrique comprenant
- une interface (26) électrique pour un module (30) de mémoire, notamment pour un module (30) de mémoire enfichable,
- un dispositif (23) de lecture de données d'inscription dans le module (30) de mémoire, les données d'inscription contenant au moins une caractérisation univoque du dispositif (1) de charge,
- un dispositif (36) d'émission pour la transmission des données d'inscription à un ordinateur (40) de gestion central,
- un dispositif (36) de réception pour la réception d'un message de confirmation d'inscription, qui a été envoyé au dispositif (1) de charge par l'ordinateur (40) de gestion après la réception des données d'inscription et
- un dispositif (17) de commande qui met, seulement à la réception du message de confirmation d'inscription, le dispositif (1) de charge dans un état prêt à la charge,
**caractérisé par**
- un dispositif (33) d'émission qui émet la demande que le module (30) de mémoire contenant les données d'inscription soit relié à l'interface (26)du dispositif (1) de charge.

8. Dispositif de charge suivant la revendication 7,
**caractérisé par**
- un dispositif (20) de localisation, notamment un module (20) GPS, pour la détermination d'informations sur l'emplacement du dispositif (1) de charge.
